# EUROPEAN PATENT APPLICATION

(11) **EP 4 697 151 A1**
(43) Date of publication of application: **18.02.2026**
(21) Application number: 25714261.2
(22) Date of filing: 26.03.2025
(51) Int. Cl.: G06F 3/04842, G06F 3/04883, G06F 3/041, G06F 3/0481

(54) **ELECTRONIC DEVICE AND METHOD FOR UNAUTHORIZING TOUCH INPUT, AND NON-TRANSITORY COMPUTER-READABLE STORAGE MEDIUM**

(30) Priority: 04.07.2024 KR 20240088543; 16.08.2024 KR 20240109756; 19.09.2024 KR 20240126665
(71) Applicant: Samsung Electronics Co., Ltd., Suwon-si, Gyeonggi-do 16677 (KR)
(72) Inventor: LEE, Junho, Suwon-si, Gyeonggi-do 16677 (KR); KIM, Sejong, Suwon-si, Gyeonggi-do 16677 (KR); LEE, Changrae, Suwon-si, Gyeonggi-do 16677 (KR); JUNG, Inhyung, Suwon-si, Gyeonggi-do 16677 (KR); KIM, Sangheon, Suwon-si, Gyeonggi-do 16677 (KR); KIM, Jeongseob, Suwon-si, Gyeonggi-do 16677 (KR)
(74) Representative: Nederlandsch Octrooibureau
(86) International application number: PCT/KR2025/003886
(87) International publication number: WO 2026/010073

(57) **Abstract**

An electronic device includes memory storing instructions, a touch sensitive display, and at least one processor. The instructions causes the electronic device to, while the touch sensitive display is in an off state, identify, through the touch sensitive display, a user gesture to display a lock screen, while displaying the lock screen based on the user gesture identified as a single tab gesture, disallow a touch input with respect to at least one user interface (UI) object included in the lock screen, and while displaying the lock screen based on the user gesture identified as a double tab gesture, allow a touch input with respect to the at least one UI object.

## Description

### [Technical Field]

The present disclosure relates to an electronic device, a method, and a non-transitory computer readable storage medium for disallowing a touch input.

### [Background Art]

An electronic device may include a touch sensitive display. The electronic device may receive a touch input through the touch sensitive display. The electronic device may execute a function corresponding to an executable object based on the touch input with respect to the executable object. The electronic device may display an Always on Display (AoD) screen through the touch sensitive display. The AoD screen may include the executable object for executing the function.

The above-described information may be provided as a related art for the purpose of helping to understand the present disclosure.

No claim or determination is raised as to whether any of the above-described information may be applied as a prior art related to the present disclosure.

### [Disclosure]

### [Technical Solution]

An electronic device is described. The electronic device may comprise memory storing instructions, comprising one or more storage mediums. The electronic device may comprise a touch sensitive display. The electronic device may comprise at least one processor comprising processing circuitry. The instructions, when executed by the at least one processor individually or collectively, may cause the electronic device to, while the touch sensitive display is in an off state, identify, through the touch sensitive display, a user gesture to display a lock screen. The instructions, when executed by the at least one processor individually or collectively, may cause the electronic device to, while displaying the lock screen based on the user gesture identified as a single tab gesture, disallow a touch input with respect to at least one user interface (UI) object included in the lock screen. The instructions, when executed by the at least one processor individually or collectively, may cause the electronic device to, while displaying the lock screen based on the user gesture identified as a double tab gesture, allow a touch input with respect to the at least one UI object.

A method is provided. The method may be executed in an electronic device with a touch sensitive display. The method may comprise, while the touch sensitive display is in an off state, identifying, through the touch sensitive display, a user gesture to display a lock screen. The method may comprise, while displaying the lock screen based on the user gesture identified as a single tab gesture, disallowing a touch input with respect to at least one user interface (UI) object included in the lock screen. The method may comprise, while displaying the lock screen based on the user gesture identified as a double tab gesture, allowing a touch input with respect to the at least one UI object.

A non-transitory computer readable storage medium is provided. The non-transitory computer readable storage medium may store one or more programs. The one or more programs may comprise instructions to, when executed by an electronic device, cause the electronic device to, while the touch sensitive display is in an off state, identify, through the touch sensitive display, a user gesture to display a lock screen. The one or more programs may comprise the instructions to, when executed by the electronic device, cause the electronic device to, while displaying the lock screen based on the user gesture identified as a single tab gesture, disallow a touch input with respect to at least one user interface (UI) object included in the lock screen. The one or more programs may comprise the instructions to, when executed by the electronic device, cause the electronic device to, while displaying the lock screen based on the user gesture identified as a double tab gesture, allow a touch input with respect to the at least one UI object.

### [Description of the Drawings]

FIG. 1 illustrates an example in which an electronic device executes a function differently from an intention of a user.
FIG. 2 is a simplified block diagram of an exemplary electronic device.
FIG. 3 is a flowchart illustrating an operation of an electronic device for allowing or disallowing a touch input with respect to at least one UI object.
FIGS. 4A and 4B illustrate an exemplary operation of an electronic device displaying a lock screen.
FIGS. 5A to 5C illustrate an exemplary operation of an electronic device that differently displays a brightness of at least one UI object.
FIG. 6 illustrates an exemplary operation of an electronic device that executes a function based on identifying a swipe gesture.
FIG. 7 is a block diagram of an electronic device in a network environment according to various embodiments.

### [Mode for Invention]

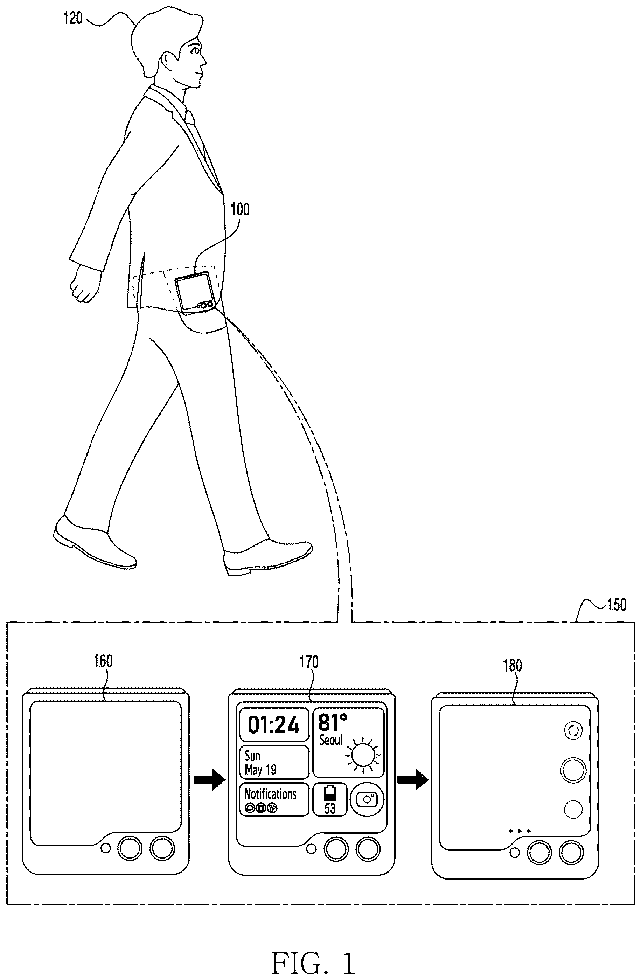

FIG. 1 illustrates an example in which an electronic device executes a function differently from an intention of a user.

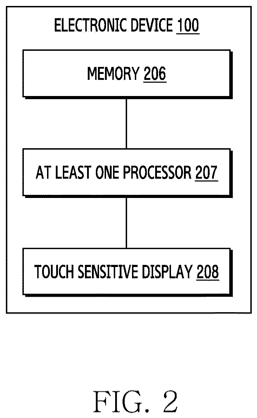

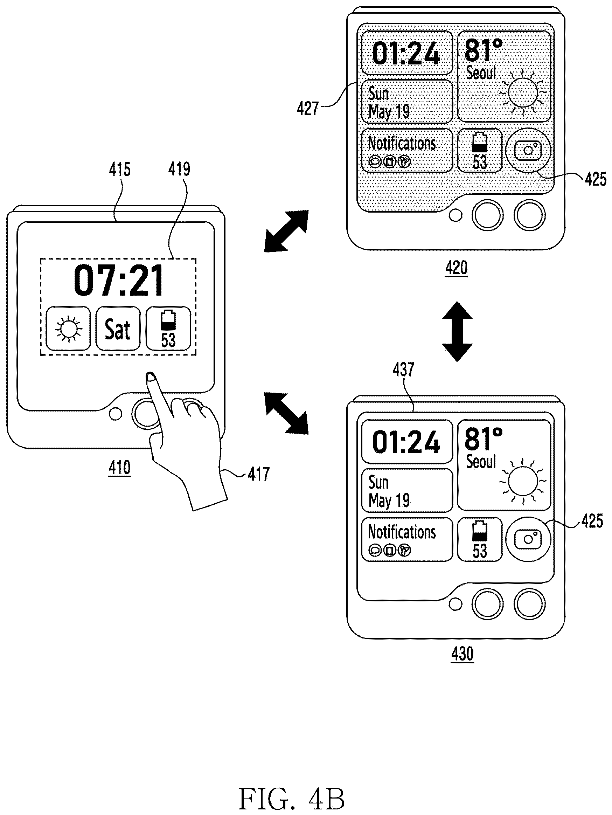

An electronic device 100 may display an Always on Display (AoD) screen (e.g., an AoD screen 415 of FIG. 4B) through a touch sensitive display (e.g., a touch sensitive display 208 of FIG. 2). For example, the AoD screen may be described as a screen displayed while the touch sensitive display is in a state for low power consumption. For example, the state for low power consumption may include a state in which at least one processor (e.g., at least one processor 207 of FIG. 2) is in a sleep state. For example, the state for low power consumption may indicate a state in which the touch sensitive display operates at a minimum refresh rate while a visual object is displayed through the touch sensitive display. For example, the electronic device 100 may display the AoD screen through a specific area that is a portion of a display area included in the touch sensitive display. For example, the AoD screen (e.g., the AoD screen 415 of FIG. 4B) displayed through the specific area may be referred to as a legacy AoD screen. For example, the electronic device 100 may display the legacy AoD screen through the specific area included in the touch sensitive display. For example, the electronic device 100 may reduce power consumed to display the AoD screen by displaying the AoD screen in the specific area included in the touch sensitive display. For example, power consumed to display the AoD screen using an entire area of the touch sensitive display may be greater than power consumed to display the AoD screen using the specific area smaller than the entire area of the touch sensitive display.

Since the electronic device 100 displays the AoD screen for a long time, a problem may occur. For example, the problem may include a burn-in phenomenon. For example, the burn-in phenomenon may be described as a phenomenon in which an afterimage of a pixel included in a display remains. The electronic device 100 may be required to prevent the burn-in phenomenon in order to maintain a quality of a screen displayed through the touch sensitive display. For example, the electronic device 100 may prevent the burn-in phenomenon by using a pixel shift technique. For example, the pixel shift technique may be described as a technique in which a value (e.g., an RGB value or a gray scale) represented by a pixel for displaying a visual object is represented by another pixel adjacent to the pixel. For example, the electronic device 100 may use a tiny processor to reduce power consumed to display the AoD screen. For example, the at least one processor (e.g., the at least one processor 207 of FIG. 2) may include the tiny processor. For example, the tiny processor may be described as a processor for displaying the AoD screen (e.g., the AoD screen 415 of FIG. 4B). For example, while displaying the AoD screen, the electronic device 100 may lower a refresh rate with respect to the touch sensitive display. For example, power consumed to display the screen at a first refresh rate may be greater than power consumed to display the screen at a second refresh rate lower than the first refresh rate. For example, the electronic device 100 may determine a range of a refresh rate that may be controlled according to the touch sensitive display. For example, the electronic device 100 may determine a range of a refresh rate that may be controlled according to a type of a substrate of the touch sensitive display. For example, the touch sensitive display may include a substrate that may be implemented with Hybrid Oxide and Polycrystalline silicon (HOP). For example, the touch sensitive display may include a substrate that may be implemented with Low Temperature Polycrystalline Silicon (LTPS). For example, the touch sensitive display may include a substrate that may be implemented with Low Temperature Polycrystalline Oxide (LTPO).

The electronic device 100 may be moved by a user 120. For example, the user 120 may move the electronic device 100 in a pocket of clothes worn by the user 120. For example, a state 150 may be described as a state of the electronic device 100 positioned in the pocket of the user 120. For example, the electronic device 100 may maintain the touch sensitive display (e.g., the touch sensitive display 208 of FIG. 2) in an off state to reduce power consumption. An off state may correspond to a state in which the touch sensitive display is turned off. For example, a screen 160 may be described as a screen in which the touch sensitive display of the electronic device 100 is in the off state. For example, the electronic device 100 may display a black image through the touch sensitive display. For example, displaying the black image through the touch sensitive display may indicate that an image displayed under a visual content for AoD displayed through the touch sensitive display in a state for low power consumption is black.

A screen 170 may be described as a screen displayed based on an input received by the electronic device 100. For example, the electronic device 100 may receive an input while displaying the screen 160 through the touch sensitive display. For example, the electronic device 100 may display the screen 170 through the touch sensitive display based on the reception of the input. For example, the input may be independent of an intention of the user 120. For example, while the user 120 is moving, the electronic device 100 may receive an input regardless of the intention of the user 120. For example, the electronic device 100 may receive an input by the clothes of the user 120. For example, the electronic device 100 may receive an input by an object different from the electronic device 100 in the pocket of the user 120.

A screen 180 may be described as a screen in which a function is executed based on another input received while the screen 170 is displayed through the touch sensitive display. For example, the electronic device 100 may execute the function based on receiving the other input while the screen 170 is displayed through the touch sensitive display. For example, a cause of the other input may be the same as a cause of the input. For example, since the electronic device 100 executes the function regardless of the intention of the user 120, power may be wasted. For example, while the electronic device 100 executes the function, the user 120 may not recognize that the function is being executed. It may be required to prevent the function from being executed regardless of the intention of the user 120.

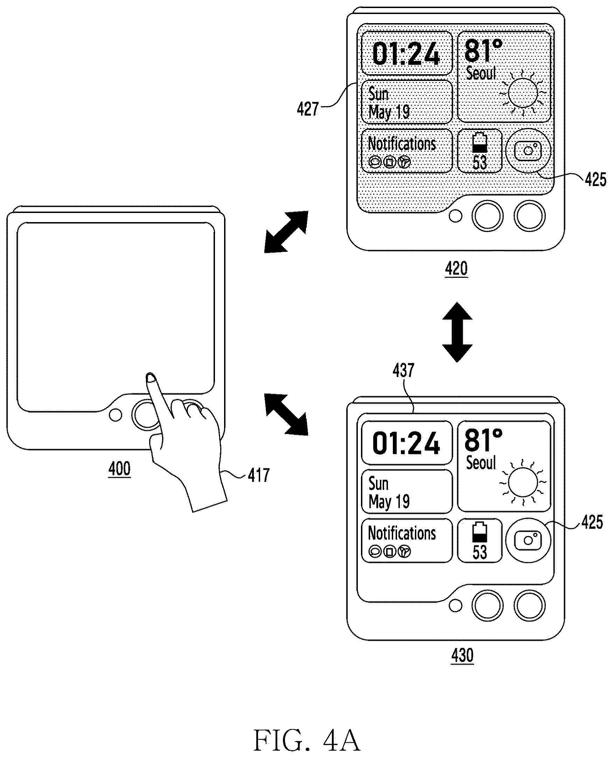

For example, the electronic device 100 may display a lock screen (e.g., a lock screen 427 of FIG. 4A) through the touch sensitive display. A lock screen may correspond to a screen regulating access to an electronic device by requiring the user to perform certain action like inputting a gesture or pressing a button. For example, while displaying the lock screen, the electronic device 100 may disallow a touch input with respect to a UI object (e.g., at least one UI object 425 of FIG. 4A) included in the lock screen. A UI object may correspond to interactive elements like buttons, menus, or icons on a user interface that users can interact with to perform tasks. For example, in order to reduce power consumption, the electronic device 100 may display the lock screen during preset time. For example, the electronic device 100 may switch a screen displayed through the touch sensitive display from the lock screen (e.g., the lock screen 427 of FIG. 4A) to the AoD screen (e.g., the AoD screen 415 of FIG. 4B) based on a lapse of the preset time. For example, the electronic device 100 may switch the screen displayed through the touch sensitive display from the lock screen (e.g., the lock screen 427 of FIG. 4A) to a black image based on the lapse of the preset time. For example, the electronic device 100 may cease displaying the lock screen (e.g., the lock screen 427 of FIG. 4A) through the touch sensitive display and switch the touch sensitive display to the off state based on the lapse of the preset time. For example, by displaying the lock screen through the touch sensitive display, the electronic device 100 may refrain from executing a function based on an unintended input by the user 120. For example, by displaying the lock screen through the touch sensitive display, the electronic device 100 may reduce power consumed to execute a function that the user 120 does not intend.

For example, the electronic device 100 may include hardware components used to perform or execute the operations. The hardware components are described and exemplified with reference to FIG. 2.

FIG. 2 is a simplified block diagram of an exemplary electronic device.

Referring to FIG. 2, an electronic device 100 may include at least one processor 207, memory 206, and a touch sensitive display 208.

The at least one processor 207 may include a hardware component for processing data using instructions stored in the memory 206. The hardware component for processing data may include a central processing unit (CPU) (e.g., including processing circuitry). The hardware component for processing data may include a graphic processing unit (GPU) (e.g., including the processing circuitry). The hardware component for processing data may include a display processing unit (DPU) (e.g., including the processing circuitry). The hardware component for processing data may include a neural processing unit (NPU) (e.g., including the processing circuitry).

The at least one processor 207 may include one or more cores. For example, the at least one processor 207 may have a structure of a multi-core processor such as a dual core, a quad core, or a hexa core.

The memory 206 may include a hardware component for storing data and/or instructions inputted to the at least one processor 207 and/or outputted from the at least one processor 207. The memory 206 may include, for example, volatile memory such as random-access memory (RAM), and/or non-volatile memory such as read-only memory (ROM). The volatile memory may include, for example, at least one of dynamic RAM (DRAM), static RAM (SRAM), cache RAM, and pseudo SRAM (PSRAM). The non-volatile memory may include, for example, at least one of programmable ROM (PROM), erasable PROM (EPROM), electrically erasable PROM (EEPROM), flash memory, a hard disk, a compact disk, and an embedded multimedia card (EMMC).

The touch sensitive display 208 may output visualized information. For example, the touch sensitive display 208 may output visualized information to a user according to a control of the at least one processor 207. The touch sensitive display 208 may include a hardware component of the electronic device 100 used to display a screen. For example, the touch sensitive display 208 may include light-emitting elements and circuits (e.g., transistors) that control the light-emitting elements to emit light. For example, each of the light-emitting elements may include an organic light emitting diode (OLED) or a micro LED. However, it is not limited thereto. For example, the touch sensitive display 208 may include a liquid crystal display (LCD).

The touch sensitive display 208 may include a touch sensor (not shown). For example, the touch sensitive display 208 may be used to detect a touch contact on the touch sensitive display 208 through the touch sensor. For example, touch sensitive display 208 may be used to detect an electrical touch contact. For example, touch sensitive display 208 may be used to detect a physical touch contact.

The at least one processor 207 may display an AoD screen (e.g., an AoD screen 415 of FIG. 4B) through the touch sensitive display 208. The at least one processor 207 may identify a user gesture (e.g., a user gesture 417 of FIG. 4A) for changing the AoD screen to a lock screen through the touch sensitive display 208. For example, the touch sensitive display 208 may be used to display the AoD screen. For example, the touch sensitive display 208 may be used to identify the user gesture. For example, while displaying a lock screen (e.g., the lock screen 427 of FIG. 4A) changed from the AoD screen based on the user gesture identified as a single tap gesture, the at least one processor 207 may disallow a touch input with respect to at least one UI object (e.g., at least one UI object 425 of FIG. 4A) included in the lock screen. For example, a single tap gesture may be described as a single touch input provided with respect to a region on the touch sensitive display 208. For example, while displaying the lock screen (e.g., a lock screen 437 of FIG. 4A) changed from the AoD screen based on the user gesture identified as a double tap gesture, the at least one processor 207 may allow the touch input with respect to the at least one UI object 425. For example, a double tap gesture may be described as a repetitive (e.g., double) touch input provided with respect to a region on the touch sensitive display 208.

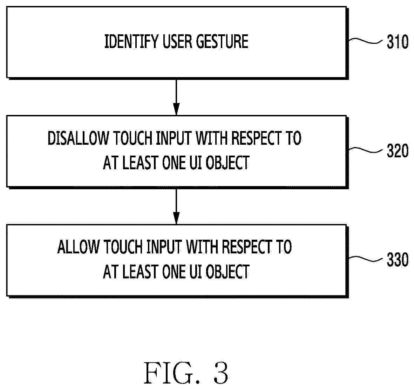

FIG. 3 is a flowchart illustrating an operation of an electronic device for allowing or disallowing a touch input with respect to at least one UI object. This method may be executed by an electronic device 100 or at least one processor 207 of the electronic device 100 illustrated in FIG. 3.

Referring to FIG. 3, in an operation 310, the at least one processor 207 may identify a user gesture (e.g., a user gesture 417 of FIG. 4A) for displaying a lock screen (e.g., a lock screen 427 or a lock screen 437 of FIG. 4A) through a touch sensitive display 208 while the touch sensitive display 208 is in an off state. For example, the at least one processor 207 may receive a user input through the touch sensitive display 208. For example, the at least one processor 207 may receive the user gesture (e.g., the user gesture 417 of FIG. 4A) through the touch sensitive display 208. For example, the user gesture may include a touch input.

The at least one processor 207 may identify the user gesture through the touch sensitive display 208 while the touch sensitive display 208 is in the off state. However, it is not limited thereto. For example, the at least one processor 207 may identify the user gesture through the touch sensitive display 208 while displaying an AoD screen (e.g., an AoD screen 415 of FIG. 4B).

In an operation 320, while displaying the lock screen (e.g., the lock screen 427 of FIG. 4) based on the user gesture (e.g., the user gesture 417 of FIG. 4A) identified as a single tap gesture, the at least one processor 207 may disallow the touch input with respect to the at least one UI object (e.g., at least one UI object 425 of FIG. 4A) included in the lock screen. For example, the single tap gesture may be described as a single touch input with respect to the touch sensitive display 208. For example, the at least one processor 207 may switch a state of the touch sensitive display 208 from the off state to an on state based on the user gesture identified as the single tap gesture. For example, the at least one processor 207 may display the lock screen (e.g., the lock screen 427 of FIG. 4A) through the touch sensitive display 208 based on the state of the touch sensitive display 208 switching from the off state to the on state. For example, the lock screen may include the at least one UI object (e.g., the at least one UI object 425 of FIG. 4A). For example, a user 120 may provide the touch input with respect to the at least one UI object. For example, the at least one processor 207 may disallow the touch input. For example, the at least one processor 207 may refrain, bypass, or block from executing a function corresponding to the at least one UI object (e.g., the at least one UI object 425 of FIG. 4A) based on the touch input. However, it is not limited thereto. For example, the at least one processor 207 may not recognize the touch input. For example, the at least one processor 207 may cut off power provided to a touch sensor included in the touch sensitive display 208 while displaying the lock screen. For example, the at least one processor 207 may ignore data on the touch input received through the touch sensitive display 208 while displaying the lock screen.

The at least one processor 207 may disallow the touch input with respect to the at least one UI object (e.g., the at least one UI object 425 of FIG. 4A) while displaying the lock screen changed from the AoD screen based on the user gesture identified as the single tap gesture. However, it is not limited thereto. For example, the at least one processor 207 may display the lock screen (e.g., the lock screen 427 of FIG. 4A) based on the user gesture identified as the single tap gesture while the touch sensitive display 208 is in the off state. For example, the at least one processor 207 may disallow the touch input with respect to the at least one UI object (e.g., the at least one UI object 425 of FIG. 4A) included in the lock screen.

In an operation 330, the at least one processor 207 may allow the touch input with respect to the at least one UI object (e.g., the at least one UI object 425 of FIG. 4A) while displaying the lock screen (e.g., the lock screen 437) based on the user gesture (e.g., the user gesture 417 of FIG. 4A) identified as a double tap gesture. For example, the double tap gesture may include a repetitive touch input with respect to the touch sensitive display 208. For example, the double tap gesture may include two touch inputs with respect to a reference area included in the touch sensitive display 208. For example, the double tap gesture may include a gesture in which two touch inputs are received during predefined time (e.g., 0.5 seconds) with respect to the reference area included in the touch sensitive display 208. For example, the at least one processor 207 may receive or identify the user gesture (e.g., the user gesture 417 of FIG. 4A) while the touch sensitive display 208 is in the off state. For example, the at least one processor 207 may identify that the user gesture indicates the double tap gesture. For example, the at least one processor 207 may display the lock screen (e.g., the lock screen 437 of FIG. 4A) based on the user gesture indicating the double tap gesture. For example, the lock screen may include the at least one UI object (e.g., the at least one UI object 425 of FIG. 4A). For example, the user 120 may provide the touch input with respect to the at least one UI object. For example, the at least one processor 207 may receive the touch input with respect to the at least one UI object through the touch sensitive display 208. For example, the at least one processor 207 may execute a function corresponding to the at least one UI object (e.g., the at least one UI object 425 of FIG. 4A) based on the received touch input. For example, the at least one UI object may correspond to a preset software application. For example, the at least one processor 207 may execute the preset software application based on receiving the touch input. For example, the at least one processor 207 may execute a function corresponding to the preset software application based on receiving the touch input.

The at least one processor 207 may allow the touch input with respect to the at least one UI object while displaying the lock screen changed from the AoD screen based on the user gesture identified as the double tap gesture. However, it is not limited thereto. For example, the at least one processor 207 may allow the touch input with respect to the at least one UI object (e.g., the at least one UI object 425 of FIG. 4A) while displaying the lock screen (e.g., the lock screen 437 of FIG. 4A) based on the user gesture (e.g., the user gesture 417 of FIG. 4A) identified as the double tap gesture. For example, the at least one processor 207 may identify the user gesture (e.g., the user gesture 417 of FIG. 4A) indicating the double tap gesture while the touch sensitive display 208 is in the off state. For example, the at least one processor 207 may change the state of the touch sensitive display 208 based on receiving the user gesture. For example, the at least one processor 207 may change the state of the touch sensitive display 208 from the off state to the on state based on receiving the user gesture. Switching of the screen and allowing or disallowing of the touch input are described and exemplified in more detail with reference to FIGS. 4A and 4B.

FIGS. 4A and 4B illustrate an exemplary operation of an electronic device displaying a lock screen.

Referring to FIG. 4A, a state 400 may be described as a state of identifying a user gesture 417 while a touch sensitive display 208 is in an off state. For example, at least one processor 207 may receive or identify the user gesture 417 while the touch sensitive display 208 is in the off state. For example, the user gesture 417 may include a touch input. For example, the at least one processor 207 may identify a limited touch input while the touch sensitive display 208 is in the off state. For example, the off state may include a state in which a visual object is not displayed through the touch sensitive display 208. For example, the off state may include an idle state or a standby state.

A state 420 may be described as a state in which a lock screen 427 is displayed through the touch sensitive display 208. For example, the at least one processor 207 may receive the user gesture 417 while the touch sensitive display 208 is in the off state. For example, the at least one processor 207 may identify that the received user gesture 417 indicates a single tap gesture while the touch sensitive display 208 is in the off state. For example, the at least one processor 207 may switch a state of the touch sensitive display 208 from the off state to an on state based on the user gesture 417 identified as the single tap gesture. For example, the at least one processor 207 may display the lock screen 427 through the touch sensitive display 208 based on switching the state of the touch sensitive display 208 to the on state. For example, the lock screen 427 may include at least one UI object 425. For example, the at least one processor 207 may receive a touch input while displaying the lock screen 427 through the touch sensitive display 208. For example, the touch input may include a touch input with respect to the at least one UI object 425. For example, the at least one processor 207 may disallow the touch input. For example, the at least one processor 207 may refrain, bypass, or block from executing a function corresponding to the at least one UI object 425 based on receiving the touch input. For example, the at least one processor 207 may not receive the touch input while displaying the lock screen 427. For example, the at least one processor 207 may control a touch sensor included in the touch sensitive display 208 not to obtain touch data while displaying the lock screen 427.

A state 430 may be described as a state in which a lock screen 437 is displayed through the touch sensitive display 208. For example, the at least one processor 207 may receive the user gesture 417 identified as a double tap gesture while the touch sensitive display 208 is in the off state. For example, the at least one processor 207 may change the state of the touch sensitive display 208 from the off state to the on state based on the user gesture 417 identified as the double tap gesture. For example, the at least one processor 207 may display the lock screen 437 through the touch sensitive display 208 based on switching the state of the touch sensitive display 208 to the on state. For example, the at least one processor 207 may receive the touch input while displaying the lock screen 437 through the touch sensitive display 208. For example, the touch input may include a touch input with respect to the at least one UI object 425 included in the lock screen 437. For example, the at least one processor 207 may execute the function corresponding to the at least one UI object 425 based on receiving the touch input with respect to the at least one UI object 425 while displaying the lock screen 437. For example, the at least one processor 207 may execute a software application corresponding to the at least one UI object 425 based on receiving the touch input with respect to the at least one UI object 425 while displaying the lock screen 437.

For example, the lock screen 427 and the lock screen 437 may be (substantially) the same screen as each other. However, it is not limited thereto. For example, the lock screen 427 and the lock screen 437 may be similar screens to each other. For example, a plurality of UI objects included in the lock screen 427 may be included in the lock screen 437. For example, a position at which the at least one UI object 425 included in the lock screen 427 is displayed on the lock screen 427 may be (substantially) the same as a position displayed on the lock screen 437. For example, a brightness level for displaying the lock screen 427 through the touch sensitive display 208 may be different from a brightness level for displaying the lock screen 437 through the touch sensitive display 208. For example, the user 120 may distinguish the lock screen 427 and the lock screen 437 by using the brightness level. For example, the at least one processor 207 may display the lock screen 427 darker than the lock screen 437.

The at least one processor 207 may switch a screen displayed through the touch sensitive display 208 from the lock screen 427 to the lock screen 437. For example, the at least one processor 207 may receive another user gesture while displaying the lock screen 427. For example, the at least one processor 207 may identify the other user gesture indicating the double tap gesture while displaying the lock screen 427 through the touch sensitive display 208. For example, the at least one processor 207 may switch from the lock screen 427 to the lock screen 437 based on receiving the other user gesture identified as the double tap gesture while displaying the lock screen 427. For example, the at least one processor 207 may display the lock screen 437 by increasing the brightness level of the lock screen 427 based on receiving the other user gesture identified as the double tap gesture while displaying the lock screen 427. For example, the at least one processor 207 may allow the touch input with respect to the at least one UI object 425 based on identifying the other user gesture. For example, the at least one processor 207 may receive the touch input with respect to the at least one UI object 425 while displaying the lock screen 437 through the touch sensitive display 208. For example, the at least one processor 207 may execute the function corresponding to the at least one UI object 425 based on the reception of the touch input.

The at least one processor 207 may identify an event in which the touch input is not received through the touch sensitive display 208 while displaying the lock screen 427 through the touch sensitive display 208. For example, the at least one processor 207 may identify the event in which no user input is received while displaying the lock screen 427 through the touch sensitive display 208. For example, the at least one processor 207 may display the lock screen 427 changed from an AoD screen 415 during preset time (e.g., 5 seconds) based on the user gesture 417 identified to the single tap gesture. For example, the at least one processor 207 may identify the event in which the touch input is not received through the touch sensitive display 208 during the preset time. For example, the at least one processor 207 may switch the state of the touch sensitive display 208 from the on state to the off state based on identifying the event.

The at least one processor 207 may display the lock screen 427 that is substantially the same as or similar to the lock screen 437, through the touch sensitive display 208. For example, the at least one processor 207 may operate in a doze mode while the touch sensitive display 208 is in the off state. The at least one processor 207 may maintain the doze mode while displaying the lock screen 427. For example, the doze mode may include a mode for reducing power consumed by the electronic device 100 by limiting functions executed in the electronic device 100. For example, the at least one processor 207 may reduce a background operation while operating in the doze mode. For example, the at least one processor 207 may reduce a network activity while operating in the doze mode. For example, the electronic device 100 may operate in the doze mode while displaying the AoD screen (e.g., the AoD screen 415 of FIG. 4B) through the touch sensitive display 208. For example, the at least one processor 207 may operate in the doze mode while displaying the lock screen 427. For example, the at least one processor 207 may receive the user gesture 417 identified as the single tap gesture while displaying the AoD screen. For example, the at least one processor 207 may switch from the AoD screen (e.g., the AoD screen 415 of FIG. 4B) operating in the doze mode to the lock screen 427 operating in the doze mode based on receiving the user gesture 417 identified as the single tap gesture. For example, the at least one processor 207 may maintain the doze mode in case of receiving the user gesture 417 identified as the single tap gesture. For example, while maintaining the doze mode, the at least one processor 207 may switch the screen displayed through the touch sensitive display 208 from the AoD screen (e.g., the AoD screen 415 of FIG. 4B) to the lock screen 427. However, it is not limited thereto. For example, the at least one processor 207 may receive the user gesture 417 identified as the single tap gesture while the touch sensitive display 208 is in the off state. For example, the at least one processor 207 may display the lock screen 427 through the touch sensitive display 208 while maintaining the doze mode, based on receiving the user gesture 417 identified as the single tap gesture.

For example, the at least one processor 207 may operate in a normal mode while displaying the lock screen 437. For example, the normal mode may include a mode with no limit on the network activity. For example, the normal mode may be referred to as a wake-up mode. For example, in case of switching the screen displayed through the touch sensitive display 208 from the lock screen 427 to the lock screen 437, the at least one processor 207 may switch a mode of the electronic device 100 from the doze mode to the normal mode.

The at least one processor 207 may set refresh rates (unit: Hertz [Hz]) of the lock screen 427 and the lock screen 437 to be the same. For example, the at least one processor 207 may maintain a preset refresh rate (e.g., 60 Hz) while the screen displayed through the touch sensitive display 208 is switched from the lock screen 427 to the lock screen 437. For example, since the electronic device 100 provides the same refresh rate on each of the lock screen 427 and the lock screen 437, the user 120 may recognize that visibility of the lock screen 427 is good.

The electronic device 100 may display the lock screen 427 based on receiving the user gesture 417 identified as the single tap gesture while the touch sensitive display 208 is in the off state. Since the electronic device 100 disallows the touch input with respect to the at least one UI object 425 included in the lock screen 427 while displaying the lock screen 427, the electronic device 100 may prevent a function from being executed based on the touch input irrelevant to an intention of the user 120. For example, since the electronic device 100 disallows the touch input with respect to the at least one UI object 425 included in the lock screen 427, waste of power may be prevented, by preventing the function corresponding to the at least one UI object 425 from being executed. For example, since the electronic device 100 displays the lock screen 427 through the touch sensitive display 208 during the preset time, power consumed to display the lock screen 427 may be reduced. For example, power consumed by the electronic device 100 to always display the lock screen 427 may be greater than power consumed by the electronic device 100 to display the lock screen 427 during the preset time. For example, since the lock screen 427 is (substantially) the same as or similar to the lock screen 437, the user 120 may use a personalized lock screen. For example, the user 120 may set the lock screen 427 and the lock screen 437 according to a preference of the user 120. For example, the electronic device 100 may set a background screen or wallpaper for the lock screen 427 and the lock screen 437 based on an input of the user 120. For example, the electronic device 100 may set a UI object related to a function or a software application to be included in the lock screen 427 and the lock screen 437 based on the input of the user 120. For example, the electronic device 100 may set a position of the UI object included in the lock screen 427 and the lock screen 437 based on the input of the user 120. For example, personalizing the AoD screen (e.g., the AoD screen 415 of FIG. 4B) may be limited. For example, it may be limited that the electronic device 100 freely sets the AoD screen based on the input of the user 120. For example, the electronic device 100 may provide the AoD screen in a predetermined form to reduce power consumption.

Referring to FIG. 4B, a state 410 may be described as a state of identifying the user gesture 417 while the touch sensitive display 208 is in a low-power display mode. For example, the low-power display mode may be referred to as a state for low power consumption. For example, the at least one processor 207 may display a visual object 419 linked to the low-power display mode through the touch sensitive display 208 while the touch sensitive display 208 is in the low-power display mode. For example, the at least one processor 207 may receive or identify the user gesture 417 while displaying the AoD screen 415 through the touch sensitive display 208. For example, the at least one processor 207 may receive or identify the user gesture 417 while displaying the visual object 419 through the touch sensitive display 208. For example, the user gesture 417 may include the touch input.

The state 420 may be described as a state in which the lock screen 427 is displayed through the touch sensitive display 208. For example, the at least one processor 207 may receive the user gesture 417 while displaying the AoD screen 415 through the touch sensitive display 208. For example, the at least one processor 207 may receive the user gesture 417 while displaying the visual object 419 through the touch sensitive display 208. For example, the at least one processor 207 may identify that the user gesture 417 received while displaying the AoD screen 415 indicates the single tap gesture. For example, the at least one processor 207 may identify that the user gesture 417 received while displaying the visual object 419 indicates the single tap gesture. For example, the at least one processor 207 may switch the screen displayed through the touch sensitive display 208 from the AoD screen 415 to the lock screen 427 based on the user gesture 417 identified as the single tap gesture. For example, based on the user gesture 417 identified as the single tap gesture, the at least one processor 207 may cease displaying the visual object 419 and display the lock screen 427 through the touch sensitive display 208. For example, the lock screen 427 may include the at least one UI object 425. For example, the at least one processor 207 may receive the touch input while displaying the lock screen 427 through the touch sensitive display 208. For example, the touch input may include the touch input with respect to the at least one UI object 425. For example, the at least one processor 207 may disallow the touch input. For example, the at least one processor 207 may refrain, bypass, or block from executing the function corresponding to the at least one UI object 425 based on receiving the touch input. For example, the at least one processor 207 may not receive the touch input while displaying the lock screen 427. For example, the at least one processor 207 may control the touch sensor included in the touch sensitive display 208 not to obtain touch data while displaying the lock screen 427.

The state 430 may be described as a state in which the lock screen 437 is displayed through the touch sensitive display 208. For example, the at least one processor 207 may receive the user gesture 417 identified as the double tap gesture while displaying the AoD screen 415. For example, the at least one processor 207 may display the visual object 419 through the touch sensitive display 208 while the touch sensitive display 208 is in the low-power display mode. For example, the at least one processor 207 may receive the user gesture 417 identified as the double tap gesture while displaying the visual object 419. For example, the at least one processor 207 may change the screen displayed through the touch sensitive display 208 from the AoD screen 415 to the lock screen 437 based on the user gesture 417 identified as the double tap gesture. For example, based on the user gesture 417 identified as the double tap gesture, the at least one processor 207 may cease displaying the visual object 419 and display the lock screen 437 through the touch sensitive display 208. For example, the at least one processor 207 may receive the touch input while displaying the lock screen 437 through the touch sensitive display 208. For example, the touch input may include the touch input with respect to the at least one UI object 425 included in the lock screen 437. For example, the at least one processor 207 may execute the function corresponding to the at least one UI object 425 based on receiving the touch input with respect to the at least one UI object 425 while displaying the lock screen 437. For example, the at least one processor 207 may execute the software application corresponding to the at least one UI object 425 based on receiving the touch input with respect to the at least one UI object 425 while displaying the lock screen 437.

For example, the lock screen 427 and the lock screen 437 may be (substantially) the same screen as each other. However, it is not limited thereto. For example, the lock screen 427 and the lock screen 437 may be similar screens to each other. For example, the plurality of UI objects included in the lock screen 427 may be included in the lock screen 437. For example, the position at which the at least one UI object 425 included in the lock screen 427 is displayed on the lock screen 427 may be (substantially) the same as a position displayed on the lock screen 437. For example, the brightness level for displaying the lock screen 427 through the touch sensitive display 208 may be different from the brightness level for displaying the lock screen 437 through the touch sensitive display 208. For example, the user 120 may distinguish the lock screen 427 and the lock screen 437 by using the brightness level. For example, the at least one processor 207 may display the lock screen 427 darker than the lock screen 437.

The at least one processor 207 may identify the event in which the touch input is not received through the touch sensitive display 208 while displaying the lock screen 427 through the touch sensitive display 208. For example, the at least one processor 207 may identify the event in which no user input is received while displaying the lock screen 427 through the touch sensitive display 208. For example, the at least one processor 207 may display the lock screen 427 changed from the AoD screen 415 during the preset time (e.g., 5 seconds) based on the user gesture 417 identified as the single tap gesture. For example, the at least one processor 207 may identify the event in which the touch input is not received through the touch sensitive display 208 while displaying the lock screen 427 during the preset time. For example, the at least one processor 207 may switch the screen displayed through the touch sensitive display 208 from the lock screen 427 to the AoD screen 415 based on identifying the event. For example, the at least one processor 207 may cease displaying the lock screen 427 and display the visual object 419 based on identifying the event. For example, the at least one processor 207 may cease displaying the lock screen 427 displayed through the touch sensitive display 208 based on identifying the event.

The at least one processor 207 may display the lock screen 427 that is substantially the same as or similar to the lock screen 437, through the touch sensitive display 208. For example, the at least one processor 207 may operate in the doze mode while displaying the AoD screen 415. For example, the at least one processor 207 may operate in the doze mode while displaying the visual object 419. The at least one processor 207 may maintain the doze mode while displaying the lock screen 427. For example, the doze mode may include a mode for reducing power consumed by the electronic device 100 by limiting functions executed in the electronic device 100. For example, the at least one processor 207 may reduce the background operation while operating in the doze mode. For example, the at least one processor 207 may reduce the network activity while operating in the doze mode. For example, the electronic device 100 may operate in the doze mode while the touch sensitive display 208 is in the off state. For example, the at least one processor 207 may operate in the doze mode while displaying the lock screen 427. For example, the at least one processor 207 may receive the user gesture 417 identified as the single tap gesture while displaying the AoD screen 415 or the visual object 419. For example, the at least one processor 207 may switch from the AoD screen 415 operating in the doze mode to the lock screen 427 operating in the doze mode based on receiving the user gesture 417 identified as the single tap gesture. For example, the at least one processor 207 may cease displaying the visual object 419 operating in the doze mode and display the lock screen 427 based on receiving the user gesture 417 identified as the single tap gesture. For example, the at least one processor 207 may maintain the doze mode in case of receiving the user gesture 417 identified as the single tap gesture. For example, the at least one processor 207 may switch the screen displayed through the touch sensitive display 208 from the AoD screen 415 to the lock screen 427 while maintaining the doze mode.

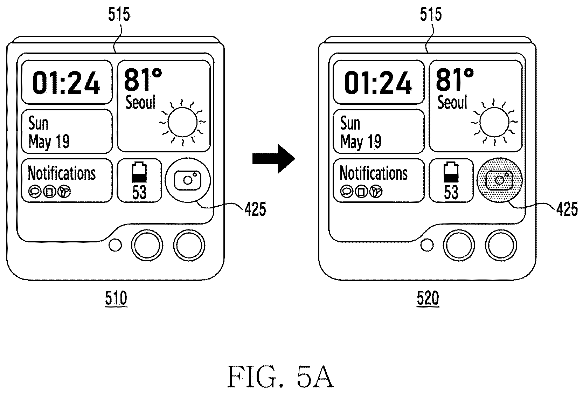

The at least one processor 207 may control the brightness level to highlight the at least one UI object 425 included in the lock screen 427 while displaying the lock screen 427 through the touch sensitive display 208. The highlighting with respect to the at least one UI object 425 is described and exemplified in more detail with reference to FIGS. 5A to 5C.

FIGS. 5A to 5C illustrate an exemplary operation of an electronic device that differently displays a brightness of at least one UI object.

Referring to FIG. 5A, a state 510 may be described as a state of a lock screen before dimming is performed. For example, at least one processor 207 may identify an event in which information on a software application corresponding to each of UI objects included in a screen 515 is updated. For example, the at least one processor 207 may identify an event for obtaining information on at least one UI object 425. For example, the screen 515 may include a plurality of UI objects including the at least one UI object 425. For example, the at least one processor 207 may obtain information on each of the plurality of UI objects included in the screen 515. For example, the obtained information may include information on weather. For example, the obtained information may include information on a notification. For example, the obtained information may include information on a schedule. For example, the obtained information may include information on a shortcut object. For example, the obtained information may include information on a state of charge (SoC) of a rechargeable battery (not shown) included in an electronic device 100. For example, the at least one processor 207 may determine the at least one UI object 425 to be highlighted among the plurality of UI objects using the obtained information. For example, the at least one processor 207 may determine the at least one UI object 425 using the information indicating that the weather is changed. For example, the at least one processor 207 may determine the at least one UI object 425 using the information indicating the reception of a new notification. For example, the at least one processor 207 may determine the at least one UI object 425 using the information indicating that the SoC is less than a threshold SoC. For example, the at least one processor 207 may determine the at least one UI object 425 using the information indicating that a touch input with respect to the shortcut object is impossible.

A state 520 may be described as a state in which dimming is applied to the at least one UI object 425. For example, the at least one processor 207 may apply dimming to the at least one UI object 425 with a first dimming value. For example, the at least one processor 207 may display the at least one UI object 425 at a first brightness level through a touch sensitive display 208 by applying dimming with the first dimming value to the at least one UI object 425. For example, the at least one processor 207 may display the at least one UI object 425 at the first brightness level by applying dimming to the at least one UI object 425 with the first dimming value while displaying a lock screen 427. For example, the at least one processor 207 may apply dimming with a second dimming value (e.g., 20%) smaller than the first dimming value (e.g., 60%) to remaining UI objects different from the at least one UI object 425 among the plurality of UI objects included in the screen 515. For example, the at least one processor 207 may display the remaining UI objects at a second brightness level brighter than the first brightness level by applying dimming with the second dimming value to the remaining UI objects. For example, the at least one processor 207 may display the screen 515 of the state 520 as a lock screen. For example, the at least one processor 207 may change the lock screen 427 displayed based on a user gesture 417 identified as a single tap gesture while the touch sensitive display 208 is in an off state, to the screen 515 of the state 520. A technique of applying dimming differently to each of the UI objects may be described as software dimming.

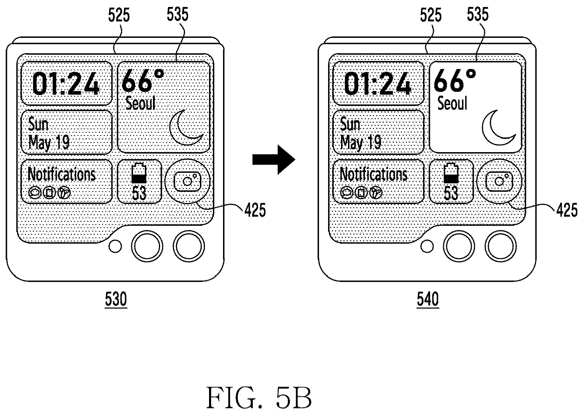

Referring to FIG. 5B, by applying less dimming to a UI object to be highlighted, the at least one processor 207 may highlight the UI object. For example, a state 530 may be described as a screen 525 to which dimming is applied. For example, the at least one processor 207 may obtain information on each of a plurality of UI objects included in the screen 525. For example, the at least one processor 207 may determine, as a UI object to be highlighted, another UI object 535 by using the obtained information.

A state 540 may be described as a state in which dimming is less applied to the other UI object 535. For example, the at least one processor 207 may apply dimming to the other UI object 535 with a third dimming value. For example, the at least one processor 207 may apply dimming to UI objects different from the other UI object 535 among the plurality of UI objects with a fourth dimming value higher than the third dimming value. For example, the at least one processor 207 may display the other UI object 535 at a third brightness level by applying dimming to each of the plurality of UI objects. For example, the at least one processor 207 may display the UI objects different from the other UI object 535 among the plurality of UI objects at a fourth brightness level lower than the third brightness level by applying dimming to each of the plurality of UI objects. For example, the at least one processor 207 may display the screen 525 of the state 540 as a lock screen. For example, the at least one processor 207 may change the lock screen 427 displayed based on the user gesture 417 identified as the single tap gesture while the touch sensitive display 208 is in the off state, to the screen 525 of the state 540.

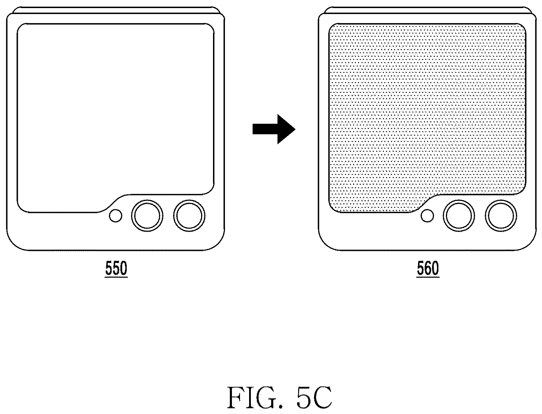

Referring to FIG. 5C, a state 550 and a state 560 may be described as states performing hardware dimming. The at least one processor 207 may reduce a brightness level of a screen displayed through the touch sensitive display 208 by performing hardware dimming. For example, the at least one processor 207 may perform hardware dimming by controlling power provided to the touch sensitive display 208. For example, the at least one processor 207 may perform hardware dimming by controlling a voltage allowed to the touch sensitive display 208. For example, the at least one processor 207 may perform hardware dimming by controlling power provided to a backlight panel included in the touch sensitive display 208. However, it is not limited thereto. For example, the at least one processor 207 may perform hardware dimming by controlling time when the touch sensitive display 208 is turned on. For example, the at least one processor 207 may perform hardware dimming with a pulse width modulation (PWM) technique. The PWM technique may be described as a technique performing hardware dimming by controlling time of an on state and the off state of the touch sensitive display 208. For example, by performing hardware dimming, the electronic device 100 may reduce power consumed by the touch sensitive display 208 compared to a case that software dimming is performed.

The at least one processor 207 may display the lock screen 427 to which dimming is applied to the lock screen 437 through the touch sensitive display 208. The at least one processor 207 may cease applying dimming to the lock screen 427 based on a change of the screen displayed through the touch sensitive display 208 from the lock screen 427 to the lock screen 437. For example, the at least one processor 207 may display the lock screen 437 at a brighter brightness level than the lock screen 427 by ceasing applying dimming to the lock screen 427. For example, the at least one processor 207 may display the lock screen 437 by ceasing to apply dimming to the lock screen 427 based on identifying another user gesture identified as a double tap gesture while displaying the lock screen 427 through the touch sensitive display 208.

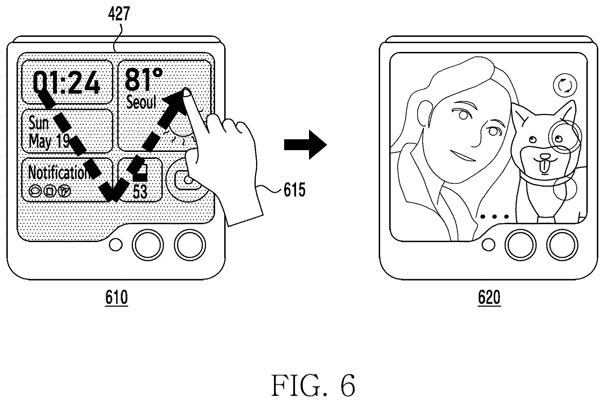

The at least one processor 207 may identify a swipe gesture while displaying the lock screen 427. For example, the at least one processor 207 may execute a function corresponding to the swipe gesture based on identifying the swipe gesture. The execution of the function is described and exemplified in more detail with reference to FIG. 6.

FIG. 6 illustrates an exemplary operation of an electronic device that executes a function based on identifying a swipe gesture.

Referring to FIG. 6, at least one processor 207 may execute a function based on identifying a preset swipe gesture 615. A state 610 may be described as a state in which the swipe gesture 615 is identified while a lock screen 427 is displayed. For example, the at least one processor 207 may identify the preset swipe gesture 615 while displaying the lock screen 427 through a touch sensitive display 208. For example, the preset swipe gesture 615 may include a swipe gesture in a shape of V. For example, the preset swipe gesture 615 may include a swipe gesture in a shape of a circle O. For example, the preset swipe gesture 615 may include a swipe gesture in a shape of a number three 3. For example, the at least one processor 207 may identify the preset swipe gesture 615 despite disallowing a touch input with respect to at least one UI object 425 while displaying the lock screen 427. For example, the preset swipe gesture 615 may include a more complex gesture than a single tap gesture. For example, since the preset swipe gesture 615 is a complex gesture, a function corresponding to the swipe gesture 615 may be prevented from being executed regardless of an intention of a user 120.

A state 620 may be described as a state in which the function corresponding to the preset swipe gesture 615 is executed based on the preset swipe gesture 615. For example, the at least one processor 207 may execute the function corresponding to the swipe gesture 615 based on the preset swipe gesture 615 identified while displaying the lock screen 427. For example, the at least one processor 207 may execute a camera function based on identifying the preset swipe gesture 615. For example, the at least one processor 207 may execute a software application for the camera based on identifying the preset swipe gesture 615. For example, the at least one processor 207 may execute a software application for music based on identifying the preset swipe gesture 615.

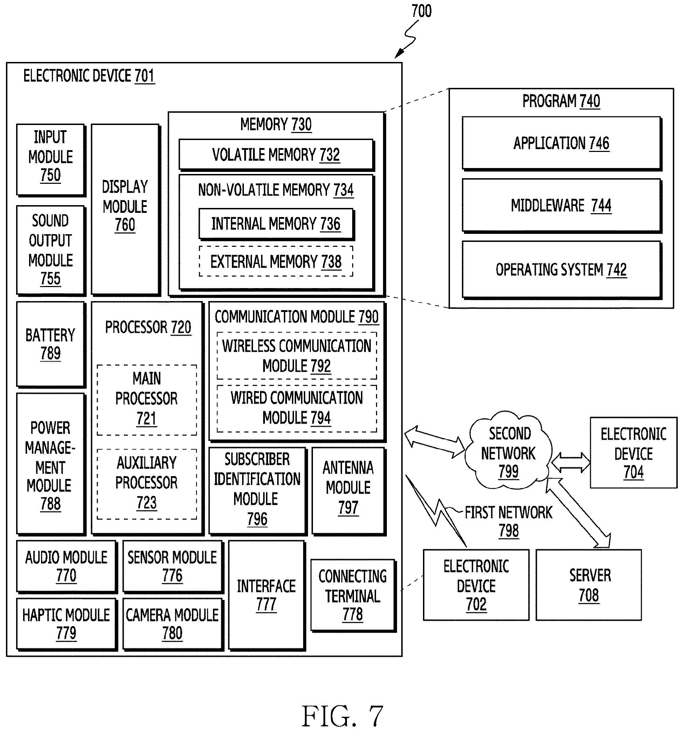

FIG. 7 is a block diagram illustrating an electronic device 701 in a network environment 700 according to various embodiments.

Referring to FIG. 7, the electronic device 701 in the network environment 700 may communicate with an electronic device 702 via a first network 798 (e.g., a short-range wireless communication network), or at least one of an electronic device 704 or a server 708 via a second network 799 (e.g., a long-range wireless communication network). According to an embodiment, the electronic device 701 may communicate with the electronic device 704 via the server 708. According to an embodiment, the electronic device 701 may include a processor 720, memory 730, an input module 750, a sound output module 755, a display module 760, an audio module 770, a sensor module 776, an interface 777, a connecting terminal 778, a haptic module 779, a camera module 780, a power management module 788, a battery 789, a communication module 790, a subscriber identification module(SIM) 796, or an antenna module 797. In some embodiments, at least one of the components (e.g., the connecting terminal 778) may be omitted from the electronic device 701, or one or more other components may be added in the electronic device 701. In some embodiments, some of the components (e.g., the sensor module 776, the camera module 780, or the antenna module 797) may be implemented as a single component (e.g., the display module 760).

The processor 720 may execute, for example, software (e.g., a program 740) to control at least one other component (e.g., a hardware or software component) of the electronic device 701 coupled with the processor 720, and may perform various data processing or computation. According to an embodiment, as at least part of the data processing or computation, the processor 720 may store a command or data received from another component (e.g., the sensor module 776 or the communication module 790) in volatile memory 732, process the command or the data stored in the volatile memory 732, and store resulting data in non-volatile memory 734. According to an embodiment, the processor 720 may include a main processor 721 (e.g., a central processing unit (CPU) or an application processor (AP)), or an auxiliary processor 723 (e.g., a graphics processing unit (GPU), a neural processing unit (NPU), an image signal processor (ISP), a sensor hub processor, or a communication processor (CP)) that is operable independently from, or in conjunction with, the main processor 721. For example, when the electronic device 701 includes the main processor 721 and the auxiliary processor 723, the auxiliary processor 723 may be adapted to consume less power than the main processor 721, or to be specific to a specified function. The auxiliary processor 723 may be implemented as separate from, or as part of the main processor 721.

The auxiliary processor 723 may control at least some of functions or states related to at least one component (e.g., the display module 760, the sensor module 776, or the communication module 790) among the components of the electronic device 701, instead of the main processor 721 while the main processor 721 is in an inactive (e.g., sleep) state, or together with the main processor 721 while the main processor 721 is in an active state (e.g., executing an application). According to an embodiment, the auxiliary processor 723 (e.g., an image signal processor or a communication processor) may be implemented as part of another component (e.g., the camera module 780 or the communication module 790) functionally related to the auxiliary processor 723. According to an embodiment, the auxiliary processor 723 (e.g., the neural processing unit) may include a hardware structure specified for artificial intelligence model processing. An artificial intelligence model may be generated by machine learning. Such learning may be performed, e.g., by the electronic device 701 where the artificial intelligence is performed or via a separate server (e.g., the server 708). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 730 may store various data used by at least one component (e.g., the processor 720 or the sensor module 776) of the electronic device 701. The various data may include, for example, software (e.g., the program 740) and input data or output data for a command related thereto. The memory 730 may include the volatile memory 732 or the non-volatile memory 734.

The program 740 may be stored in the memory 730 as software, and may include, for example, an operating system (OS) 742, middleware 744, or an application 746.

The input module 750 may receive a command or data to be used by another component (e.g., the processor 720) of the electronic device 701, from the outside (e.g., a user) of the electronic device 701. The input module 750 may include, for example, a microphone, a mouse, a keyboard, a key (e.g., a button), or a digital pen (e.g., a stylus pen).

The sound output module 755 may output sound signals to the outside of the electronic device 701. The sound output module 755 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 760 may visually provide information to the outside (e.g., a user) of the electronic device 701. The display module 760 may include, for example, a display, a hologram device, or a projector and control circuitry to control a corresponding one of the display, hologram device, and projector. According to an embodiment, the display module 760 may include a touch sensor adapted to detect a touch, or a pressure sensor adapted to measure the intensity of force incurred by the touch.

The audio module 770 may convert a sound into an electrical signal and vice versa. According to an embodiment, the audio module 770 may obtain the sound via the input module 750, or output the sound via the sound output module 755 or a headphone of an external electronic device (e.g., an electronic device 702) directly (e.g., wiredly) or wirelessly coupled with the electronic device 701.

The sensor module 776 may detect an operational state (e.g., power or temperature) of the electronic device 701 or an environmental state (e.g., a state of a user) external to the electronic device 701, and then generate an electrical signal or data value corresponding to the detected state. According to an embodiment, the sensor module 776 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 777 may support one or more specified protocols to be used for the electronic device 701 to be coupled with the external electronic device (e.g., the electronic device 702) directly (e.g., wiredly) or wirelessly. According to an embodiment, the interface 777 may include, for example, a high definition multimedia interface (HDMI), a universal serial bus (USB) interface, a secure digital (SD) card interface, or an audio interface.

A connecting terminal 778 may include a connector via which the electronic device 701 may be physically connected with the external electronic device (e.g., the electronic device 702). According to an embodiment, the connecting terminal 778 may include, for example, an HDMI connector, a USB connector, a SD card connector, or an audio connector (e.g., a headphone connector).

The haptic module 779 may convert an electrical signal into a mechanical stimulus (e.g., a vibration or a movement) or electrical stimulus which may be recognized by a user via his tactile sensation or kinesthetic sensation. According to an embodiment, the haptic module 779 may include, for example, a motor, a piezoelectric element, or an electric stimulator.

The camera module 780 may capture a still image or moving images. According to an embodiment, the camera module 780 may include one or more lenses, image sensors, image signal processors, or flashes.

The power management module 788 may manage power supplied to the electronic device 701. According to an embodiment, the power management module 788 may be implemented as at least part of, for example, a power management integrated circuit (PMIC).

The battery 789 may supply power to at least one component of the electronic device 701. According to an embodiment, the battery 789 may include, for example, a primary cell which is not rechargeable, a secondary cell which is rechargeable, or a fuel cell.

The communication module 790 may support establishing a direct (e.g., wired) communication channel or a wireless communication channel between the electronic device 701 and the external electronic device (e.g., the electronic device 702, the electronic device 704, or the server 708) and performing communication via the established communication channel. The communication module 790 may include one or more communication processors that are operable independently from the processor 720 (e.g., the application processor (AP)) and supports a direct (e.g., wired) communication or a wireless communication. According to an embodiment, the communication module 790 may include a wireless communication module 792 (e.g., a cellular communication module, a short-range wireless communication module, or a global navigation satellite system (GNSS) communication module) or a wired communication module 794 (e.g., a local area network (LAN) communication module or a power line communication (PLC) module). A corresponding one of these communication modules may communicate with the external electronic device via the first network 798 (e.g., a short-range communication network, such as Bluetooth^{™}, wireless-fidelity (Wi-Fi) direct, or infrared data association (IrDA)) or the second network 799 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 792 may identify and authenticate the electronic device 701 in a communication network, such as the first network 798 or the second network 799, using subscriber information (e.g., international mobile subscriber identity (IMSI)) stored in the subscriber identification module 796.

The wireless communication module 792 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 792 may support a high-frequency band (e.g., the mmWave band) to achieve, e.g., a high data transmission rate. The wireless communication module 792 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 792 may support various requirements specified in the electronic device 701, an external electronic device (e.g., the electronic device 704), or a network system (e.g., the second network 799). According to an embodiment, the wireless communication module 792 may support a peak data rate (e.g., 20Gbps or more) for implementing eMBB, loss coverage (e.g., 764dB or less) for implementing mMTC, or U-plane latency (e.g., 0.5ms or less for each of downlink (DL) and uplink (UL), or a round trip of 7ms or less) for implementing URLLC.

The antenna module 797 may transmit or receive a signal or power to or from the outside (e.g., the external electronic device) of the electronic device 701. According to an embodiment, the antenna module 797 may include an antenna including a radiating element composed of a conductive material or a conductive pattern formed in or on a substrate (e.g., a printed circuit board (PCB)). According to an embodiment, the antenna module 797 may include a plurality of antennas (e.g., array antennas). In such a case, at least one antenna appropriate for a communication scheme used in the communication network, such as the first network 798 or the second network 799, may be selected, for example, by the communication module 790 (e.g., the wireless communication module 792) from the plurality of antennas. The signal or the power may then be transmitted or received between the communication module 790 and the external electronic device via the selected at least one antenna. According to an embodiment, another component (e.g., a radio frequency integrated circuit (RFIC)) other than the radiating element may be additionally formed as part of the antenna module 797.

According to various embodiments, the antenna module 797 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 701 and the external electronic device 704 via the server 708 coupled with the second network 799. Each of the electronic devices 702 or 704 may be a device of a same type as, or a different type, from the electronic device 701. According to an embodiment, all or some of operations to be executed at the electronic device 701 may be executed at one or more of the external electronic devices 702, 704, or 708. For example, if the electronic device 701 should perform a function or a service automatically, or in response to a request from a user or another device, the electronic device 701, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 701. The electronic device 701 may provide the outcome, with or without further processing of the outcome, as at least part of a reply to the request. To that end, a cloud computing, distributed computing, mobile edge computing (MEC), or client-server computing technology may be used, for example. The electronic device 701 may provide ultra low-latency services using, e.g., distributed computing or mobile edge computing. In another embodiment, the external electronic device 704 may include an internet-of-things (IoT) device. The server 708 may be an intelligent server using machine learning and/or a neural network. According to an embodiment, the external electronic device 704 or the server 708 may be included in the second network 799. The electronic device 701 may be applied to intelligent services (e.g., smart home, smart city, smart car, or healthcare) based on 5G communication technology or IoT-related technology.

As described above, an electronic device (e.g., the electronic device 100) may comprise memory (e.g., the memory 206) storing instructions. The electronic device may comprise a touch sensitive display (e.g., the touch sensitive display 208). The electronic device may comprise at least one processor (e.g., the at least one processor 207). The instructions, when executed by the at least one processor individually or collectively, may cause the electronic device to, while the touch sensitive display is in an off state, identify, through the touch sensitive display, a user gesture (e.g., the user gesture 417) to display a lock screen (e.g., the lock screen 427 and the lock screen 437). The instructions, when executed by the at least one processor individually or collectively, may cause the electronic device to, while displaying the lock screen based on the user gesture identified as a single tab gesture, disallow a touch input with respect to at least one user interface (UI) object (e.g., the at least one UI object 425) included in the lock screen. The instructions, when executed by the at least one processor individually or collectively, may cause the electronic device to, while displaying the lock screen based on the user gesture identified as a double tab gesture, allow a touch input with respect to the at least one UI object.

For example, the lock screen may include a plurality of UI objects including the at least one UI object. The instructions, when executed by the at least one processor individually or collectively, may cause the electronic device to, while displaying the lock screen based on the user gesture identified as the single tab gesture, based on an event of obtaining information for the at least one UI object, display, at a first brightness level, the at least one UI object. The instructions, when executed by the at least one processor individually or collectively, may cause the electronic device to, while displaying the lock screen changed from the AoD screen based on the user gesture identified as the single tab gesture, display, at a second brightness level that is brighter than the first brightness level, remaining UI objects different from the at least one UI object among the plurality of UI objects.

For example, the instructions, when executed by the at least one processor individually or collectively, may cause the electronic device to, while displaying the lock screen based on the user gesture identified as the single tab gesture, based on the event of obtaining the information for the at least one UI object, by applying dimming with a first dimming value to the at least one UI object, display, at the first brightness level, the at least one UI object. The instructions, when executed by the at least one processor individually or collectively, may cause the electronic device to, while displaying the lock screen changed from the AoD screen based on the user gesture identified as the single tab gesture, by applying dimming with a second dimming value that is smaller than the first dimming value to the remaining UI objects, display, at the second brightness level, the remaining UI objects.

For example, the instructions, when executed by the at least one processor individually or collectively, may cause the electronic device to, while the touch sensitive display is in a low-power display mode, display, through the touch sensitive display, a visual object (e.g., the visual object 419) linked with the low-power display mode. The instructions, when executed by the at least one processor individually or collectively, may cause the electronic device to, while displaying the visual object, identify, through the touch sensitive display, the user gesture to display the lock screen. The instructions, when executed by the at least one processor individually or collectively, may cause the electronic device to, while displaying the lock screen based on the user gesture identified as the single tab gesture, disallow the touch input with respect to the at least one UI object included in the lock screen. The instructions, when executed by the at least one processor individually or collectively, may cause the electronic device to, while displaying the lock screen based on the user gesture identified as the double tab gesture, allow the touch input with respect to the at least one UI object.

For example, the instructions, when executed by the at least one processor individually or collectively, may cause the electronic device to, while displaying the lock screen based on the user gesture identified as the single tab gesture, identify, through the touch sensitive display, another user gesture indicating the double tab gesture. The instructions, when executed by the at least one processor individually or collectively, may cause the electronic device to, based on identifying the other user gesture, allow the touch input with respect to the at least one UI object.

For example, the instructions, when executed by the at least one processor individually or collectively, may cause the electronic device to, while displaying the lock screen based on the user gesture identified the single tab gesture during preset time, identify an event such that a touch input is not received through the touch sensitive display. The instructions, when executed by the at least one processor individually or collectively, may cause the electronic device to, based on identifying the event, cease to display the lock screen being displayed through the touch sensitive display.

For example, the instructions, when executed by the at least one processor individually or collectively, may cause the electronic device to, while displaying the lock screen based on the user gesture identified as the single tab gesture, identify, through the touch sensitive display, a preset swipe gesture (e.g., the swipe gesture 615). The instructions, when executed by the at least one processor individually or collectively, may cause the electronic device to, based on identifying the preset swipe gesture, execute a function corresponding to the preset swipe gesture.

As described above, a method executed by an electronic device (e.g., the electronic device 100) with a touch sensitive display (e.g., the touch sensitive display 208) may comprise, while the touch sensitive display is in an off state, identifying, through the touch sensitive display (e.g., the touch sensitive display 208), a user gesture (e.g., the user gesture 417) to display a lock screen (e.g., the lock screen 427 and the lock screen 437). The method may comprise, while displaying the lock screen based on the user gesture identified as a single tab gesture, disallowing a touch input with respect to at least one user interface (UI) object (e.g., the at least one UI object 425) included in the lock screen. The method may comprise, while displaying the lock screen based on the user gesture identified as a double tab gesture, allowing a touch input with respect to the at least one UI object.

For example, the lock screen may include a plurality of UI objects including the at least one UI object. The method may comprise, while displaying the lock screen based on the user gesture identified as the single tab gesture, based on an event of obtaining information for the at least one UI object, displaying, at a first brightness level, the at least one UI object. The method may comprise, while displaying the lock screen changed from the AoD screen based on the user gesture identified as the single tab gesture, displaying, at a second brightness level that is brighter than the first brightness level, remaining UI objects different from the at least one UI object among the plurality of UI objects.

For example, the method may comprise, while displaying the lock screen based on the user gesture identified as the single tab gesture, based on the event of obtaining the information for the at least one UI object, by applying dimming with a first dimming value to the at least one UI object, displaying, at the first brightness level, the at least one UI object. The method may comprise, while displaying the lock screen changed from the AoD screen based on the user gesture identified as the single tab gesture, by applying dimming with a second dimming value that is smaller than the first dimming value to the remaining UI objects, displaying, at the second brightness level, the remaining UI objects.

For example, the method may comprise, while the touch sensitive display is in a low-power display mode, displaying, through the touch sensitive display, a visual object linked with the low-power display mode. The method may comprise, while displaying the visual object, identifying, through the touch sensitive display, the user gesture to display the lock screen. The method may comprise, while displaying the lock screen based on the user gesture identified as the single tab gesture, disallowing the touch input with respect to the at least one UI object included in the lock screen. The method may comprise, while displaying the lock screen based on the user gesture identified as the double tab gesture, allowing the touch input with respect to the at least one UI object.

For example, the method may comprise, while displaying the lock screen based on the user gesture identified as the single tab gesture, identifying, through the touch sensitive display, another user gesture indicating the double tab gesture. The method may comprise, based on identifying the other user gesture, allowing the touch input with respect to the at least one UI object.

For example, the method may comprise, while displaying the lock screen based on the user gesture identified the single tab gesture during preset time, identifying an event such that a touch input is not received through the touch sensitive display. The method may comprise, based on identifying the event, ceasing to display the lock screen being displayed through the touch sensitive display.

For example, the method may comprise, while displaying the lock screen based on the user gesture identified as the single tab gesture, identifying, through the touch sensitive display, a preset swipe gesture (e.g., the swipe gesture 615). The method may comprise, based on identifying the preset swipe gesture, executing a function corresponding to the preset swipe gesture.

As described above, a computer readable storage medium storing one or more programs, the one or more programs comprising instructions to, when executed by the electronic device, cause the electronic device to, while the touch sensitive display is in an off state, identify, through the touch sensitive display (e.g., the touch sensitive display 208), a user gesture (e.g., the user gesture 417) to display a lock screen (e.g., the lock screen 427 and the lock screen 437). The one or more programs may comprise the instructions to, when executed by the electronic device, cause the electronic device to, while displaying the lock screen based on the user gesture identified as a single tab gesture, disallow a touch input with respect to at least one user interface (UI) object (e.g., the at least one UI object 425) included in the lock screen. The one or more programs may comprise the instructions to, when executed by the electronic device, cause the electronic device to, while displaying the lock screen based on the user gesture identified as a double tab gesture, allow a touch input with respect to the at least one UI object.

For example, the lock screen may include a plurality of UI objects including the at least one UI object. The one or more programs may comprise the instructions to, when executed by the electronic device, cause the electronic device to, while displaying the lock screen based on the user gesture identified as the single tab gesture, based on an event of obtaining information for the at least one UI object, display, at a first brightness level, the at least one UI object. The one or more programs may comprise the instructions to, when executed by the electronic device, cause the electronic device to, while displaying the lock screen changed from the AoD screen based on the user gesture identified as the single tab gesture, display, at a second brightness level that is brighter than the first brightness level, remaining UI objects different from the at least one UI object among the plurality of UI objects.

For example, the one or more programs may comprise the instructions to, when executed by the electronic device, cause the electronic device to, while displaying the lock screen based on the user gesture identified as the single tab gesture, based on the event of obtaining the information for the at least one UI object, by applying dimming with a first dimming value to the at least one UI object, display, at the first brightness level, the at least one UI object. The one or more programs may comprise the instructions to, when executed by the electronic device, cause the electronic device to, while displaying the lock screen changed from the AoD screen based on the user gesture identified as the single tab gesture, by applying dimming with a second dimming value that is smaller than the first dimming value to the remaining UI objects, display, at the second brightness level, the remaining UI objects.

For example, the one or more programs may comprise the instructions to, when executed by the electronic device, cause the electronic device to, while the touch sensitive display is in a low-power display mode, display, through the touch sensitive display, a visual object linked with the low-power display mode. The one or more programs may comprise the instructions to, when executed by the electronic device, cause the electronic device to, while displaying the visual object, identify, through the touch sensitive display, the user gesture to display the lock screen. The one or more programs may comprise the instructions to, when executed by the electronic device, cause the electronic device to, while displaying the lock screen based on the user gesture identified as the single tab gesture, disallow the touch input with respect to the at least one UI object included in the lock screen. The one or more programs may comprise the instructions to, when executed by the electronic device, cause the electronic device to, while displaying the lock screen based on the user gesture identified as the double tab gesture, allow the touch input with respect to the at least one UI object.

For example, the one or more programs may comprise the instructions to, when executed by the electronic device, cause the electronic device to, while displaying the lock screen based on the user gesture identified as the single tab gesture, identify, through the touch sensitive display, another user gesture indicating the double tab gesture. The one or more programs may comprise the instructions to, when executed by the electronic device, cause the electronic device to, based on identifying the other user gesture, allow the touch input with respect to the at least one UI object.

For example, the one or more programs may comprise the instructions to, when executed by the electronic device, cause the electronic device to, while displaying the lock screen based on the user gesture identified the single tab gesture during preset time, identify an event such that a touch input is not received through the touch sensitive display. The one or more programs may comprise the instructions to, when executed by the electronic device, cause the electronic device to, based on identifying the event, cease to display the lock screen being displayed through the touch sensitive display.

For example, the one or more programs may comprise the instructions to, when executed by the electronic device, cause the electronic device to, while displaying the lock screen based on the user gesture identified as the single tab gesture, identify, through the touch sensitive display, a preset swipe gesture (e.g., the swipe gesture 615). The one or more programs may comprise the instructions to, when executed by the electronic device, cause the electronic device to, based on identifying the preset swipe gesture, execute a function corresponding to the preset swipe gesture.

The device described above may be implemented as a hardware component, a software component, and/or a combination of a hardware component and a software component. For example, the device and component described in the embodiments may be implemented by using one or more general purpose computers or special purpose computers, such as a processor, controller, arithmetic logic unit (ALU), digital signal processor, microcomputer, field programmable gate array (FPGA), programmable logic unit (PLU), microprocessor, or any other device capable of executing and responding to instruction. The processing device may perform an operating system (OS) and one or more software applications executed on the operating system. In addition, the processing device may access, store, manipulate, process, and generate data in response to the execution of the software. For convenience of understanding, there is a case that one processing device is described as being used, but a person who has ordinary knowledge in the relevant technical field may see that the processing device may include a plurality of processing elements and/or a plurality of types of processing elements. For example, the processing device may include a plurality of processors or one processor and one controller. In addition, another processing configuration, such as a parallel processor, is also possible.

The software may include a computer program, code, instruction, or a combination of one or more thereof, and may configure the processing device to operate as desired or may command the processing device independently or collectively. The software and/or data may be embodied in any type of machine, component, physical device, computer storage medium, or device, to be interpreted by the processing device or to provide a command or data to the processing device. The software may be distributed on network-connected computer systems and stored or executed in a distributed manner. The software and data may be stored in one or more computer-readable recording medium.

The method according to the embodiment may be implemented in a form of a program command that may be performed through various computer means and recorded on a computer-readable medium. In this case, the medium may continuously store a program executable by the computer or may temporarily store the program for execution or download. In addition, the medium may be various recording means or storage means in a form of a single or a combination of several hardware, but is not limited to a medium directly connected to a certain computer system, and may exist distributed on the network. Examples of media may include a magnetic medium such as a hard disk, floppy disk, and magnetic tape, optical recording medium such as a CD-ROM and DVD, magneto-optical medium, such as a floptical disk, and those configured to store program instructions, including ROM, RAM, flash memory, and the like. In addition, examples of other media may include recording media or storage media managed by app stores that distribute applications, sites that supply or distribute various software, servers, and the like.

As described above, although the embodiments have been described with limited embodiments and drawings, a person who has ordinary knowledge in the relevant technical field is capable of various modifications and deformations from the above description. For example, even if the described technologies are performed in a different order from the described method, and/or the components of the described system, structure, device, circuit, and the like are coupled or combined in a different form from the described method, or replaced or substituted by other components or equivalents, an appropriate result may be achieved.

Therefore, other implementations, other embodiments, and those equivalent to the scope of the claims are in the scope of the claims described later. According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (100) comprising:
memory (206) storing instructions, comprising one or more storage mediums;
a touch sensitive display (208); and
at least one processor (207) comprising processing circuitry,
wherein the instructions, when executed by the at least one processor (207) individually or collectively, cause the electronic device (100) to:
while the touch sensitive display (208) is in an off state, identify, through the touch sensitive display (208), a user gesture (417) to display a lock screen (427, 437),
while displaying the lock screen (427, 437), based on the user gesture (417) identified as a single tab gesture, disallow a touch input with respect to at least one user interface (UI) object included in the lock screen (427, 437), and
while displaying the lock screen (427, 437), based on the user gesture (417) identified as a double tab gesture, allow a touch input with respect to the at least one UI object (425).

2. The electronic device (100) of claim 1, wherein the lock screen (427, 437) includes a plurality of UI objects including the at least one UI object (425),
wherein the instructions, when executed by the at least one processor (207) individually or collectively, cause the electronic device (100) to:
while displaying the lock screen (427, 437) based on the user gesture (417) identified as the single tab gesture:
based on an event of obtaining information for the at least one UI object (425), display, at a first brightness level, the at least one UI object (425), and
display, at a second brightness level that is brighter than the first brightness level, remaining UI objects different from the at least one UI object (425) among the plurality of UI objects.

3. The electronic device (100) of claim 2, wherein the instructions, when executed by the at least one processor (207) individually or collectively, cause the electronic device (100) to:
while displaying the lock screen (427, 437) based on the user gesture (417) identified as the single tab gesture:
based on the event of obtaining the information for the at least one UI object (425), by applying dimming with a first dimming value to the at least one UI object (425), display, at the first brightness level, the at least one UI object (425), and
by applying dimming with a second dimming value that is smaller than the first dimming value to the remaining UI objects, display, at the second brightness level, the remaining UI objects.

4. The electronic device (100) of claim 1, wherein the instructions, when executed by the at least one processor (207) individually or collectively, cause the electronic device (100) to:
while the touch sensitive display (208) is in a low-power display mode, display, through the touch sensitive display (208), a visual object linked with the low-power display mode,
while displaying the visual object, identify, through the touch sensitive display (208), the user gesture (417) to display the lock screen (427, 437),
while displaying the lock screen (427, 437) based on the user gesture (417) identified as the single tab gesture, disallow the touch input with respect to the at least one UI object (425) included in the lock screen (427, 437), and
while displaying the lock screen (427, 437) based on the user gesture (417) identified as the double tab gesture, allow the touch input with respect to the at least one UI object (425).

5. The electronic device (100) of claim 1, wherein the instructions, when executed by the at least one processor (207) individually or collectively, cause the electronic device (100) to:
while displaying the lock screen (427, 437) based on the user gesture (417) identified as the single tab gesture, identify, through the touch sensitive display (208), another user gesture (417) indicating the double tab gesture, and
based on identifying the other user gesture (417), allow the touch input with respect to the at least one UI object (425).

6. The electronic device (100) of claim 1, wherein the instructions, when executed by the at least one processor (207) individually or collectively, cause the electronic device (100) to:
while displaying the lock screen (427, 437) based on the user gesture (417) identified as the single tab gesture during preset time, identify an event such that a touch input is not received through the touch sensitive display (208), and
based on identifying the event, cease to display the lock screen (427, 437) being displayed through the touch sensitive display (208).

7. The electronic device (100) of claim 1, wherein the instructions, when executed by the at least one processor (207) individually or collectively, cause the electronic device (100) to:
while displaying the lock screen (427, 437) based on the user gesture (417) identified as the single tab gesture, identify, through the touch sensitive display (208), a preset swipe gesture, and
based on identifying the preset swipe gesture, execute a function corresponding to the preset swipe gesture.

8. A method executed in an electronic device (100) with a touch sensitive display (208), the method comprising:
while the touch sensitive display (208) is in an off state, identifying, through the touch sensitive display (208), a user gesture (417) to display a lock screen (427, 437),
while displaying the lock screen (427, 437) based on the user gesture (417) identified as a single tab gesture, disallowing a touch input with respect to at least one user interface (UI) object included in the lock screen (427, 437), and
while displaying the lock screen (427, 437) based on the user gesture (417) identified as a double tab gesture, allowing a touch input with respect to the at least one UI object (425).

9. The method of claim 8, wherein the lock screen (427, 437) includes a plurality of UI objects including the at least one UI object (425), and
wherein the method further comprising:
while displaying the lock screen (427, 437) based on the user gesture (417) identified as the single tab gesture:
based on an event of obtaining information for the at least one UI object (425), displaying, at a first brightness level, the at least one UI object (425), and
displaying, at a second brightness level that is brighter than the first brightness level, remaining UI objects different from the at least one UI object (425) among the plurality of UI objects.

10. The method of claim 9, further comprising:
while displaying the lock screen (427, 437) based on the user gesture (417) identified as the single tab gesture:
based on the event of obtaining the information for the at least one UI object (425), by applying dimming with a first dimming value to the at least one UI object (425), displaying, at the first brightness level, the at least one UI object (425), and
by applying dimming with a second dimming value that is smaller than the first dimming value to the remaining UI objects, displaying, at the second brightness level, the remaining UI objects.

11. The method of claim 8, further comprising:
while the touch sensitive display (208) is in a low-power display mode, displaying, through the touch sensitive display (208), a visual object linked with the low-power display mode,
while displaying the visual object, identifying, through the touch sensitive display (208), the user gesture (417) to display the lock screen (427, 437),
while displaying the lock screen (427, 437) based on the user gesture (417) identified as the single tab gesture, disallowing the touch input with respect to the at least one UI object (425) included in the lock screen (427, 437), and
while displaying the lock screen (427, 437) based on the user gesture (417) identified as the double tab gesture, allowing the touch input with respect to the at least one UI object (425).

12. The method of claim 8, further comprising:
while displaying the lock screen (427, 437) based on the user gesture (417) identified as the single tab gesture, identifying, through the touch sensitive display (208), another user gesture (417) indicating the double tab gesture, and
based on identifying the other user gesture (417), allowing the touch input with respect to the at least one UI object (425).

13. The method of claim 8, further comprising:
while displaying the lock screen (427, 437) based on the user gesture (417) identified as the single tab gesture during preset time, identifying an event such that a touch input is not received through the touch sensitive display (208), and
based on identifying the event, ceasing to display the lock screen (427, 437) being displayed through the touch sensitive display (208).

14. The method of claim 8, further comprising:
while displaying the lock screen (427, 437) based on the user gesture (417) identified as the single tab gesture, identifying, through the touch sensitive display (208), a preset swipe gesture, and
based on identifying the preset swipe gesture, executing a function corresponding to the preset swipe gesture.

15. A non-transitory computer readable storage medium storing one or more programs, the one or more programs comprising instructions to, when executed by an electronic device (100) with a touch sensitive display (208), cause the electronic device (100) to carry out the method of any of claims 8 to 14.
